# EUROPEAN PATENT SPECIFICATION

(11) **EP 2 017 171 B1**
(45) Date of publication and mention of the grant of the patent: **11.04.2012**
(21) Application number: 08252445.5
(22) Date of filing: 17.07.2008
(51) Int. Cl.: B62J 23/00, B62J 25/00

(54) **Footrest for a straddle-type vehicle**
Fußstütze für ein Grätschsitz-Fahrzeug
Repose-pied pour un véhicule du type monté à califourchon

(30) Priority: 19.07.2007 JP 2007188842
(43) Date of publication of application: 21.01.2009
(73) Proprietor: Yamaha Hatsudoki Kabushiki Kaisha, Shizuoka-ken Shizuoka 438-8501 (JP)
(72) Inventor: Kurihara, Kouji, Iwata-shi, Shizuoka-ken 438-8501 (JP)
(74) Representative: Moreland, David

(56) References cited:
- JP-A- 8 216 953
- JP-A- 2002 284 067
- JP-A- 2007 001 533
- JP-A- 2007 055 489
- US-A1- 2007 062 327

## Description

### FIELD OF THE INVENTION

The present invention relates to a footrest, and in particular to a tandem footrest. The present invention also relates to a straddle-type vehicle comprising a footrest, and an exterior cover assembly for a straddle-type vehicle.

### BACKGROUND TO THE INVENTION

Tandem footrests are, for example, in a straddle-type vehicle, members on which a backseat passenger (tandem rider) puts his or her feet. A heavy load from the backseat passenger applies on the tandem footrests because the backseat passenger puts his or her feet on them. In order to achieve required strength and reduction in weight, the tandem footrest is occasionally made of an aluminum forging or the like. Such a tandem footrest is disclosed in JP-A-2003-40173.

In the straddle-type vehicle, there is a case that a bracket for attaching the tandem footrest lies adjacent to an exterior cover. In such a case, it may be desired for some vehicle designs to create a sense that the tandem footrest and the exterior cover are integrally combined or are continuous. However, if there is an assembly error on the tandem footrest and the exterior cover, the visible outlines of both components will be misaligned. Consequently, the sense of continuity between the tandem footrest and the exterior may be difficult to achieve. It is therefore desirable that if such a design is required, that this be achieved to a high standard. At the same time, it is also desirable to achieve reductions in weight and manufacturing cost.

JP2007001533 describes a step stay or footrest which is secured to the frame of a motorcycle. A pivot cover is mounted next to the step stay. The upper part of the pivot cover is attached to the bearing bracket of the main frame and the lower part of the pivot cover is secured to the step stay by fixtures which extend underneath the step stay.

JP2002284067 describes a pillion step holder structure for attaching a pillion step to a motorcycle. The body cover of the motorcycle is supported by the pillion step holder and the body cover and holder are designed to improve mountability of the cover.

JP8216953 describes a step for a passenger on a motorcycle having a step body and a holder part. A base end part of the step body is pivotally mounted on the holder part and an opening part, which contains the step body, is formed in the holder part.

US2007/0062327 describes a passenger footrest structure including a generally v-shaped footrest support bracket for supporting a passenger footrest and a mount formed to support another accessory part. The passenger footrest is secured to each of left and right sides of the rear frame by fastening members such as bolts.

### SUMMARY OF THE INVENTION

In accordance with the present invention there is provided a footrest for a straddle-type vehicle as set out in claim 1. Preferred embodiments of the present invention are laid down in the appended dependent claims.

Described herein is a tandem footrest which includes a bracket attached to a body frame. The bracket includes a flange extending to an inner side of an exterior cover disposed adjacent to the bracket. The flange includes a support section for supporting the inner side of the exterior cover.

The exterior cover may have a projection on its inner surface, and a fitting hole to which the projection fits may be formed in the flange of the tandem footrest.

A bush to which the projection fits elastically may be attached to the fitting hole formed in the flange of the tandem footrest. In this case, the projection of the exterior cover passes through the fitting hole, and a tip of the projection that passes through the fitting hole may be thicker than a portion thereof that fits to the fitting hole.

The exterior cover may be a resin molding formed by a split die. The projection may extend to an extracting direction of the die of the exterior cover. The flange of the tandem footrest may extend to the inner side of the exterior cover so as to be orthogonal to the projection.

In addition, the exterior cover may have an end surface that is on an adjacent side to the bracket of the tandem footrest and that is formed with a cutout in a portion where the flange extends. The tandem footrest may be provided with a step from an outer surface of the bracket. The flange may extend from an inner side of an outer surface of the bracket through the cutout on the end surface of the exterior cover.

Described herein is a footrest for a straddle-type vehicle, the footrest comprising a bracket adapted to be attached to a body frame of a vehicle, the bracket including a flange adapted to extend to an inner side of an exterior cover adapted to be disposed adjacent to the bracket, wherein the flange includes a support section adapted to support the exterior cover such that the exterior cover and the bracket are relatively positionable in a direction lying in the plane of the flange.

The support section of the flange may be adapted to support an inner side of the exterior cover.

The flange may comprise a fitting hole adapted to receive a projection formed on an inner surface of the exterior cover.

A bush may be mounted within the fitting hole formed in the flange. The bush may be adapted to elastically receive the projection formed on the exterior cover.

The projection of the exterior cover may pass through the fitting hole, and a tip of the projection passing through the fitting hole may be thicker than a portion thereof fitted to the fitting hole.

The exterior cover may comprise a resin molding formed by a split die. The projection may project in an extracting direction of the die of the exterior cover. The flange of the footrest may extend to the inner side of the exterior cover so as to be orthogonal to the projection.

An outline of the bracket of the footrest may be arranged to continue an outline of the exterior cover.

The exterior cover may comprise an end surface that is on an adjacent side to the bracket of the footrest and that is formed with a cutout in a portion where the flange extends. The footrest may be provided with a step from an outer surface of the bracket. The flange may extend from the inner side of the outer surface of the bracket through the cutout on the end surface of the exterior cover to the inner side of the exterior cover.

The footrest may be or define a tandem footrest.

Described herein is a straddle-type vehicle comprising a footrest according to any aspect defined above.

The straddle type vehicle may comprise the exterior cover.

Described herein is an exterior cover assembly for a straddle-type vehicle, said cover assembly comprising:
an exterior cover; and
a footrest according to claim 1.

The exterior cover assembly may comprise features or components defined in respect to any other aspect.

A tandem footrest includes a bracket attached to a body frame. The bracket includes a flange extending to an inner side of an exterior cover disposed adjacent to the bracket. The flange includes a support section for supporting the inner side of the exterior cover. In this tandem footrest, because the flange supports an adjacent portion of the exterior cover to the tandem footrest, it is possible to secure rigidity of the exterior cover on the adjacent portion. Also, because the tandem footrest functions as a bracket for attaching the exterior cover, it is possible to reduce the number of components and thus to reduce the manufacturing cost.

In a case that the exterior cover has a projection on its inner surface and that a fitting hole to which the projection fits is formed on the flange of the tandem footrest, the exterior cover and the tandem footrest can be aligned with each other. Also, because the exterior cover includes the projection on its inner surface, and also because the fitting hole to which the projection fits is formed on the flange of the tandem footrest, the relative positioning of the exterior cover and the tandem footrest is possible. Therefore, even when a design expressing a sense of togetherness is applied to the exterior cover and the tandem footrest, such a design can be realized more precisely.

In a case that a bush to which the projection fits elastically is attached in the fitting hole formed in the flange of the tandem footrest, it is possible to suppress a wobble of a portion of the exterior cover with the projection to a considerable degree. Also, in this case, if the projection of the exterior cover further passes through the fitting hole, and a tip of the projection passing through the fitting hole is thicker than the portion thereof that fits to the fitting hole, the relative positioning of the exterior cover and the tandem footrest can be performed more precisely.

In a case that the exterior cover is a resin molding formed by a split mold, that the projection extends in an extracting direction of the die of the exterior cover, and that the flange of the tandem footrest extends to the inner side of the exterior cover so as to be orthogonal to the projection, it is easy to form the exterior cover. Also, the attachment and detachment of the exterior cover is facilitated.

The exterior cover has an end surface that is on an adjacent side to the bracket of the tandem footrest and that is formed with a cutout in a portion where the flange extends. The tandem footrest provides a step from an outer surface of the bracket, and the flange extends from an inner side of the outer surface of the bracket through the cutout on the end surface of the exterior cover. In such a case, the inner side of the exterior cover and that of the bracket become less visible from the standpoint of appearance.

### BRIEF DESCRIPTION OF THE DRAWINGS

These and other aspects of the present invention will now be described, by way of example only, with reference to the accompanying drawings, in which:
FIG. 1 is a side view of a straddle-type vehicle including a tandem footrest according to an embodiment of the present invention;
FIG. 2 is a side view of the tandem footrest and an exterior cover according to the embodiment of the present invention;
FIG. 3 is a side view of the tandem footrest according to the embodiment of the present invention;
Fig. 4 is a top view of the exterior cover according to the embodiment of the present invention;
Fig. 5 is a side view of the exterior cover according to the embodiment of the present invention;
FIG. 6 is a cross-sectional view taking along A-A of FIG. 5, showing a projection of the exterior cover according to the embodiment of the present invention;
FIG. 7 shows an inner side of the tandem footrest and that of the exterior cover according to the present invention;
FIG. 8 shows an installment condition of the tandem footrest and the exterior cover of the present invention from the inner side; and
FIG. 9 is a cross-sectional end view, taken along B-O-B of FIG. 3, showing profile of a bracket of the tandem footrest.

### DETAILED DESCRIPTION OF THE DRAWINGS

A description will hereinafter be made of a tandem footrest according to an embodiment of the present invention with reference to the drawings. In the drawings, the same reference numeral is given to members and parts having the same function. It should be understood that the present invention is not limited to the embodiment below.

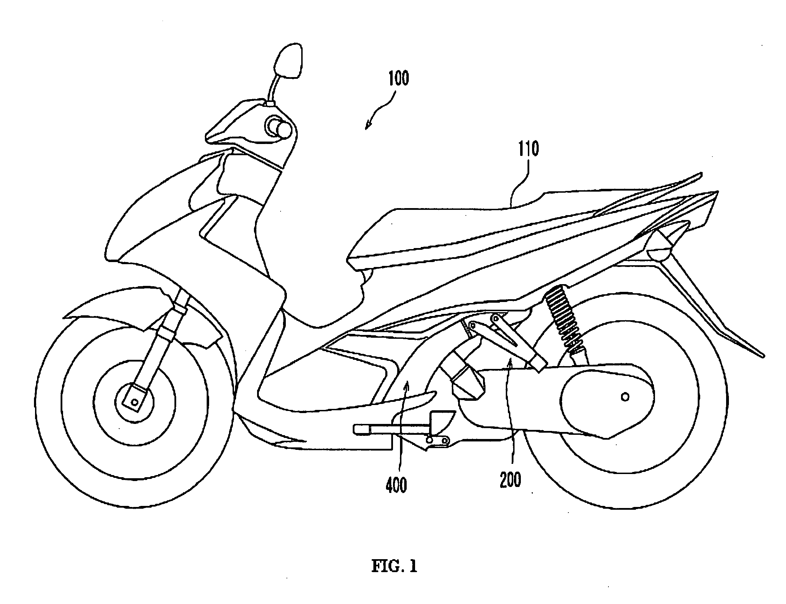

Description will herein made of the tandem footrest according to the present invention by illustrating an example of a straddle-type vehicle 100 as shown in FIG. 1. A seat 110 of this straddle-type vehicle 100 is formed to permit a backseat passenger to sit behind a rider (driver). FIG. 1 is a left side view of the straddle-type vehicle 100. Tandem footrests 200 are mounted on both left and right sides of a vehicle behind the rider's regular riding posture.

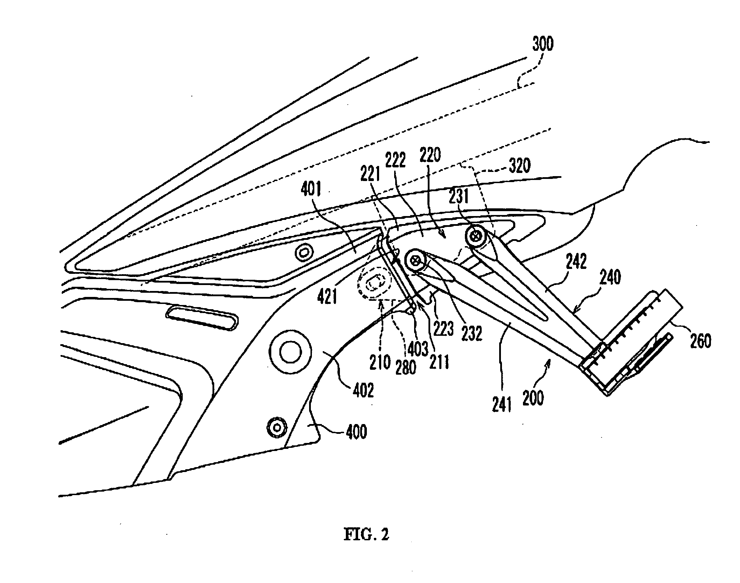

In this embodiment, each of the tandem footrests 200 is, as shown in FIG. 2, provided with a bracket 220 to be attached to a body frame 300. The bracket 220 includes a flange 280 that extends to an inner side of an exterior cover 400 disposed adjacent to the bracket 220. The flange 280 has a support section 210 for supporting the inner side of the exterior cover 400. In this case, because the flange 280 supports an adjacent portion of the exterior cover 400 to the tandem footrest 200, it is possible to secure rigidity of the exterior cover 400 in the adjacent portion. Also, because the tandem footrest 200 functions as a bracket for attaching the exterior cover 400, it is possible to reduce the number of components and thus to reduce the manufacturing cost.

The tandem footrest according to the present invention will now be described in further detail.

In this embodiment, because a considerable load of the backseat passenger acts on the tandem footrest 200, an aluminum casting is adopted for the tandem footrest 200 in order to satisfy required rigidity and reduction in weight. The tandem footrest 200 can have various modifications in terms of its material, manufacturing method, and the like as far as the required functions of the tandem footrest 200 are maintained. Thus, the tandem footrest 200 according to the present invention is not limited to the aluminum casting.

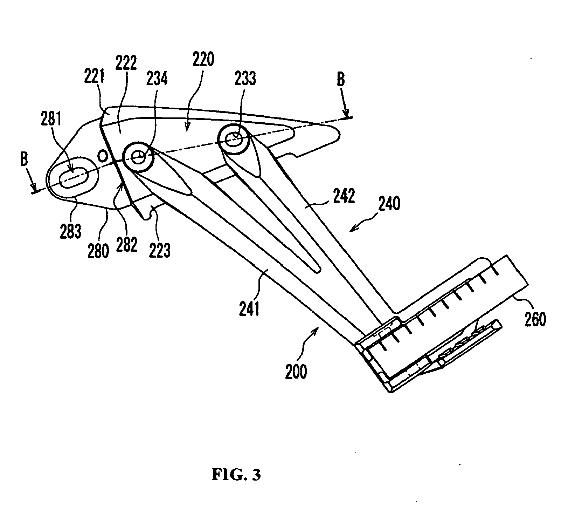

As shown in FIGs. 2 and 3, this tandem footrest 200 includes the bracket 220, an arm section 240, a tandem footrest section 260, and the flange 280.

The bracket 220 is a part that is attached to the body frame 300. In this embodiment, the bracket 220 is screwed to another bracket 320 attached to the body frame 300. In this embodiment, the tandem footrest 200 is illustrated such that the bracket 220 is screwed to the other bracket 320 attached to the body frame 300; however, the tandem footrest 200 may be attached directly to the body frame 300.

In this embodiment, the bracket 220 of the tandem footrest 200 is, as shown in FIG. 2, adjacent to the exterior cover 400 disposed in front of the tandem footrest 200. In this embodiment, the outline of the bracket 220 and that of the exterior cover 400 are continuous. In other words, the bracket 220 and the exterior cover 400 are designed to create an impression of continuity from the standpoint of appearance.

More specifically, in this embodiment, the bracket 220 and the exterior cover 400 are designed to have spacing 211 of a few millimeters therebetween, and respectively have upper side sections 221, 401, outer surfaces 222, 402, and lower side sections 223, 403 to make them continue with each other. That is, in this embodiment, a surface forming the upper side section 221, the outer surface 222, and the lower side section 223 of the bracket 220 and a surface forming the upper side section 401, the outer surface 402, and the lower side section 403 of the exterior cover 400 are placed successively in a longitudinal direction of the vehicle 100 via the spacing 211 between the bracket 220 and the exterior cover 400. In further detail, in this embodiment, as shown in FIG. 2, a distance between the upper side section 221 and the lower side section 223 of the bracket 220 and a distance between the upper side section 401 and the lower side section 403 of the exterior cover 400 gradually reduce from the front side to the rear side of the vehicle 100. Accordingly, a series of designs from the exterior cover 400 to the bracket 220 of the tandem footrest 200 gradually gets thinner or tapers so as to produce an aesthetically pleasing design to create an impression that the vehicle 100 runs faster.

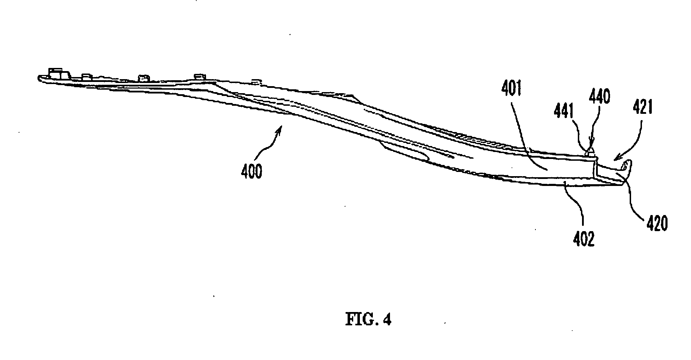

In this embodiment, as shown in FIG. 4, the exterior cover 400 has an end surface 420 that is on an adjacent side to the bracket 220 of the tandem footrest 200 and that is formed with a cutout 421 in a portion where the flange 280 of the tandem footrest 200 extends.

The arm section 240 of the tandem footrest 200 is, as shown in FIGs. 2 and 3, a part connecting the bracket 220 with the tandem footrest section 260. In this embodiment, two arms 241, 242 extend from the bracket 220, and tips of the arms 241, 242 are integrated to be one. Accordingly, compared to a case where the arm section 240 is formed with a single arm, the radius of each arm can be smaller. Further, it is possible to dispose the two arms 241, 242 with spacing therebetween. Therefore, it is designed to reduce a heavy impression of the tandem footrest 200, and thus to give a slim and light impression thereof.

Also, in this embodiment, as shown in FIG. 2, holes for inserting bolts 231, 232 in the bracket 220 are formed at base ends of the arm section 240. The bracket 220 is screwed through the holes to the other bracket 320 attached to the body frame 300. In this embodiment, as shown in FIG. 3, the bracket 220 and the arm section 240 are the integrally formed aluminum casting, and bolt holes 233, 234 are formed at the base ends of the arm section 240. Thereby, it is designed to produce such an impression from the standpoint of appearance that the bracket 220 and the arm section 240 are separate components and that the arm section 240 is screwed to the bracket 220.

The tandem footrest section 260 is attached to a tip of the arm section 240 as shown in FIGs. 2 and 3. In this embodiment, the tandem footrest section 260 is a separate component from the tip of the arm section 240, and is attached to the tip of the arm section 240 so that it can be folded in an outwardly projecting state in a vehicle width direction and in a state following a lateral side of the vehicle. When there is no backseat passenger, and thus this tandem footrest 200 is unnecessary, it can be folded to an inner side of the vehicle. On the other hand, when there is a backseat passenger, and thus this tandem footrest 200 is necessary, it can be projected to the outer side in the vehicle width direction.

As shown in FIG. 2, the flange 280 extends to the inner side of the exterior cover 400 disposed adjacent to the bracket 220, and has the support section 210 for supporting the inner side of the exterior cover 400.

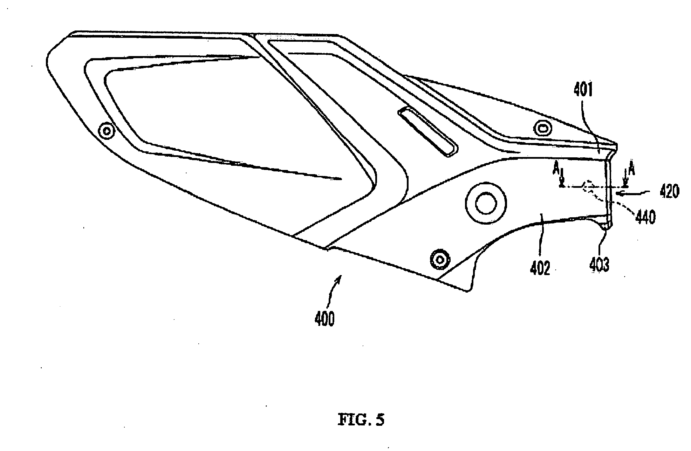

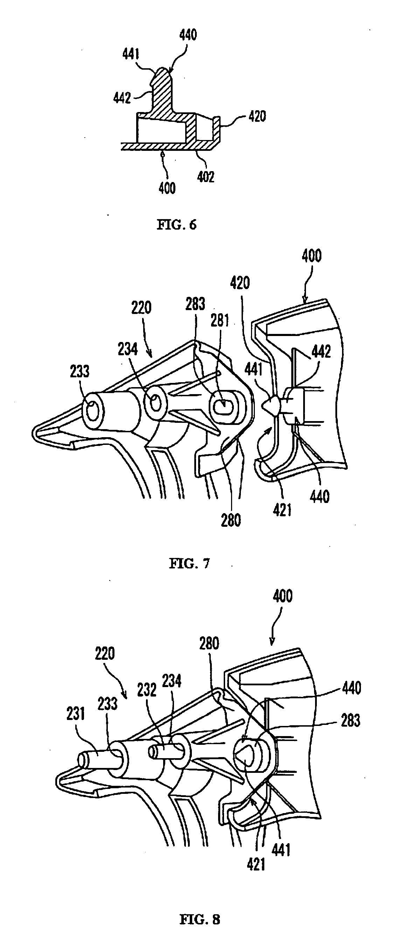

In this embodiment, as shown in FIGs. 5 and 6, the exterior cover 400 has a projection 440 formed in a portion corresponding to the support section 210 on the inner surface. As shown in FIG. 3, a fitting hole 281 to which the projection 440 fits is formed on the flange 280 of the tandem footrest 200.

The exterior cover 400 in this embodiment is a resin molding formed by a split die. In this embodiment, although the die is not shown, the projection 440 of the exterior cover 400 projects in an extracting direction of exterior cover 400 from the die as shown in FIG. 7. In other words, in this embodiment, the projection 440 projects in the extracting direction of the exterior cover 400 from the die forming the inner surface of the exterior cover 400. In addition, in this embodiment, as shown in FIGs. 7 and 8, the projection 440 passes through the fitting hole 281 formed in the flange 280 of the tandem footrest 200. A tip 441 of the projection 440 passing through the fitting hole 281 is thicker than a portion 442 thereof fitted to the fitting hole 281.

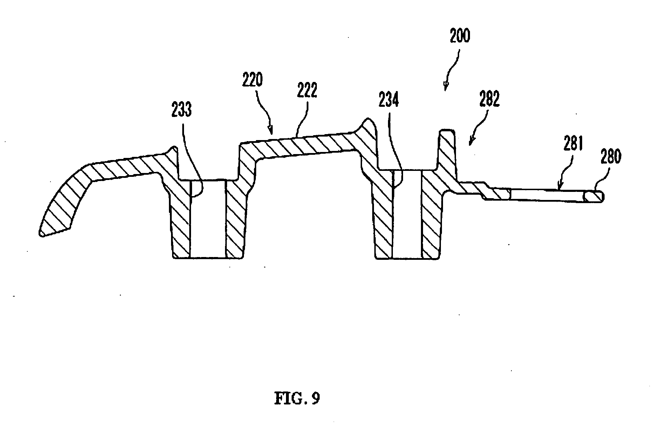

As shown in FIG. 2, the flange 280 of the tandem footrest 200 extends to the inner side of the exterior cover 400. In this embodiment, as shown in FIG. 9, the tandem footrest 200 is provided with a step 282 from the outer surface 222 of the bracket 220. As shown in FIG. 2, the flange 280 extends from the inner side of the outer surface 222 of the bracket 220 to the inner side of the exterior cover 400 through the cutout 421 of the end surface 420 of the exterior cover 400.

In this embodiment, as shown in FIGs. 2 and 3, the flange 280 has a generally triangular shape whose base end is wide and whose width narrows toward the tip penetrating the inner side of the exterior cover 400. The flange 280 extends so as to face an inner surface of the exterior cover 400 in the inner side of the exterior cover 400. In this embodiment, as shown in FIG. 8, the flange 280 of the tandem footrest 200 extends to the inner side of the exterior cover 400 so as to be orthogonal to the projection 440, which is described above.

This flange 280 is, as described above, formed with a fitting hole 281 to which the projection 440 formed on the inner surface of the exterior cover 400 fits. In this embodiment, the fitting hole 281 is formed as an elongated slot that is long along a direction in which the exterior cover 440 lies adjacent to the bracket 220. The bracket 220 and the exterior cover 400 are adjacent to each other with spacing 211 in a few millimeters therebetween. The respective upper side sections 221, 401, the outer surfaces 222, 402, and the lower side sections 223, 403 of the bracket 220 and the exterior cover 440 are designed such that they are successively placed. The fitting hole 281 formed in the flange 280 is formed as the elongated slot along the direction of the exterior cover 400 adjoining the bracket 220. Therefore, even if the position of the fitting hole 281 of the bracket 220 and the position of the projection 440 of the exterior cover 400 are not aligned in some degree in the direction of the exterior cover 400 adjoining the bracket 220, both of the components can easily be fitted to each other because of compensation of the misalignment by the elongated slot. In addition, because the fitting hole 281 is formed as the slot elongated along the direction of the exterior cover 400 adjoining the bracket 200, it is possible to relatively position the exterior cover 400 and the bracket 200 in a direction orthogonal to the direction of the exterior cover 400 adjoining to the bracket 220. This allows the bracket 220 and the exterior cover 400 to precisely embody a design that the respective upper side sections 221, 401 and the lower side sections 223, 403 continue with each other.

A bush 283 to which the projection 440 fits elastically is attached to the fitting hole 281. To be more specific, a rubber bush is used as the bush 283 in this embodiment. As described above, in the projection 440 of the exterior cover 400, the tip 441 thereof passing through the fitting hole 281 is slightly thicker than an inner diameter (interior gap) of the bush 283 inserted in the fitting hole 281. Therefore, the projection 440 can be fitted by elastically deforming the bush 283 with a fixed force. It is also possible to pull out the projection 440 of the exterior cover 400 from the fitting hole 281 by applying the fixed force.

In this embodiment, the tandem footrest 200 is first screwed to the other bracket 320 attached to the body frame 300. As described above, the bracket 220 of the tandem footrest 200 has two screw-fastening sections. Therefore, in a case that the other bracket 320 to be attached to the body frame 300 is exactly attached to the body frame 300 with precision, the tandem footrest 200 can be attached in a predetermined position with respect to the body frame 300.

The projection 440 of the exterior cover 400 is then fitted to the fitting hole 281 of the flange 280 of the tandem footrest 200 to attach the exterior cover 400 to the tandem footrest 200. Although not shown, the exterior cover 400 is attached to the vehicle 100 as shown in FIG. 1 by a few predetermined fitting sections in addition to the flange 280 of the tandem footrest 200.

As described above, the tandem footrest 200 is, as shown in FIG. 2, provided with the bracket 220 to be attached to the body frame 300 in this embodiment. The bracket 220 includes the flange 280 extending inside of the exterior cover 400 disposed adjacent to the bracket 220, and the flange 280 includes the support section 210 for supporting the inner side of the exterior cover 400. In this case, because the flange 280 supports the portion of the exterior cover 400 adjacent to the tandem footrest 200, it is possible to secure the rigidity of the exterior cover 400 in the adjacent portion. Also, because the tandem footrest 200 functions as a bracket for attaching the exterior cover 400, it is possible to reduce the number of components and thus to reduce the manufacturing cost.

In this embodiment, as shown in FIG. 4, the exterior cover 400 has the projection 440 on its inner side, and as shown in FIG. 3, the fitting hole 281 to which the projection 440 is fitted is formed in the flange 280 of the tandem footrest 200. Therefore, it is possible to align the exterior cover 400 and the tandem footrest 200 with each other. In addition, because the projection 440 is formed on the inner surface of the exterior cover 400, and also because the fitting hole 281 is formed in the flange 280 of the tandem footrest 200, it is possible to conceal the coupling condition of the tandem footrest 200 and the exterior cover 400 from the standpoint of appearance. Moreover, the exterior cover 400 and the tandem footrest 200 can relatively be positioned. Thus, when the integrated design is applied to the exterior cover 400 and the tandem footrest 200, such a design can be realized more precisely.

In this embodiment, the bush 283 to which the projection 440 elastically fits is attached to the fitting hole 281 formed in the flange 280 of the tandem footrest 200. Therefore, the exterior cover 400 can be fitted with the fixed force and can also be removed from the flange 280 of the bracket 220 by applying the fixed force. Accordingly, for example, assembly and removal works of the exterior cover 400 as well as the maintenance and the like of the vehicle 100 can be facilitated. In such an embodiment, vibration, rattling or wobbling of the portion of the exterior cover 400 can be suppressed to a considerable degree.

In this embodiment, as shown in FIGs. 7 and 8, the projection 440 of the exterior cover 400 further passes through the fitting hole 281, and the tip 441 of the projection 440 passing through the fitting hole 281 is thicker than the portion 442 thereof fitted to the fitting hole 281. Therefore, as described above, the exterior cover 400 can be fitted with the fixed force and can also be removed from the flange 280 of the bracket 220 by applying the fixed force. Accordingly, it is possible to further effectively obtain effects such that the maintenance of the vehicle can easily be performed due to ease of the assembly and removal works of the exterior cover 400 and that the wobble of the portion of the exterior cover 400 can be suppressed to a great degree. It is further possible to relatively position the exterior cover 400 and the tandem footrest 200 more precisely.

In this embodiment, as shown in FIG. 7, the exterior cover 400 is a resin molding formed by the split die, and the projection 440 projects to the extracting direction of exterior cover 400. Therefore, it is easy to form the exterior cover 400. Furthermore, in this embodiment, as shown in FIG. 8, the flange 280 of the tandem footrest 200 extends inside of the exterior cover 400 so as to be orthogonal to the projection 440. Thus, when the exterior cover 400 is fitted to the fitting hole 281 of the flange 280, the projection 440 of the exterior cover 400 can be fitted to the flange 280 generally at right angle. Consequently, the attachment and detachment of the exterior cover 400 can be facilitated. Moreover, it is less likely for the projection 440 of the exterior cover 400 to be damaged during the attachment or detachment thereof due to a large force acting on the projection 440 of the exterior cover 400 in a cantilever direction.

Here, in order to achieve such functions and effects, the flange 280 of the tandem footrest 200 is designed such that it extends to the inner side of the exterior cover 400 to be orthogonal to the projection 440. In other words, the flange 280 of the tandem footrest 200 does not have to be orthogonal to the projection 440 of the exterior cover 400 in a strict manner. Rather, the flange 280 has to be generally orthogonal to the projection 440 of the exterior cover 400, and, for example, it may be tilted at ±10 degrees.

With the above configuration, in this embodiment, the bracket 220 of the tandem footrest 200 includes the flange 280 extending to the inner side of the exterior cover 400 disposed adjacent to the bracket 220, and the flange 280 supports the inner side of the exterior cover 400. Therefore, it is possible to relatively position the exterior cover 400 and the tandem footrest 200. Consequently, even when the outline of the exterior cover 400 is designed to continue that of the bracket 280 of the tandem footrest 200 as shown in this embodiment, such a design can be realized precisely.

In this embodiment, the exterior cover 400 has the end surface 420 that is on the adjacent side to the bracket 220 of the tandem footrest 200 and that is formed with the cutout 421 in the portion thereof where the flange 280 extends. The step 282 is provided on the bracket 220 of the tandem footrest 200. Due to the step 282, the flange 280 extends from the inner side of the outer surface 222 of the bracket 220 to the inner side of the exterior cover 400 through the cutout 421 of the end surface 420 of the exterior cover 400. Thereby the end surface 420 of the exterior cover 400 faces the step 282 of the bracket 220 at spacing between the exterior cover 400 and the bracket 220. The flange 280 further extends to the inner side of spacing, and thus, the inner side of the exterior cover 400 and that of the bracket 220 become less visible from the standpoint of appearance. Further, in this embodiment, an end of the exterior cover 400 is hidden by the step 282 of the bracket 220 in the portion where the exterior cover 400 lies adjacent to the bracket 220 of the tandem footrest 200. Therefore, for example, even when there occur painting spots at the end of the exterior cover, they will be hidden. Therefore, the finish of the vehicle can look flawless.

A tandem footrest according to an embodiment of the present invention has been described above; however, the tandem footrest according to the present invention is not limited to the embodiment described above.

For example, the above embodiment illustrates that the bracket and the arm are made up of an integrated aluminum casting in the tandem footrest. However, the tandem footrest may have the bracket and the arm as separate components.

Also, the flange of the tandem footrest and the support section for supporting the inner surface of the exterior cover are not limited to the above embodiment as long as they have a configuration that the flange of the tandem footrest extending inside the exterior cover supports the inner surface of the exterior cover. For example, the exterior cover and the flange of the tandem footrest may be screwed together. To cite an example, a bolt may be implanted on the inner surface of the exterior cover and may pass through a bolt insertion hole formed in the flange of the tandem footrest. Then, a nut may be put on the bolt from a rear surface of the flange of the tandem footrest to tighten the bolt. As a tightening method other than the screwing method, for example, an engagement section (an pawl engagement section, for example) for engaging the inner surface of the exterior cover with the flange of the tandem footrest may be provided therebetween.

The above-mentioned tandem footrest can also be applied to various types of straddle-type vehicles such as scooter-type motorcycles, tricycles, four-wheeled buggies, and snowmobiles.

The present invention is utilized for tandem footrests of various straddle-type vehicles, for example.

### Description of Reference Numerals

- 100:: straddle-type vehicle (vehicle)
- 110:: seat
- 200:: tandem footrest
- 210:: support section
- 211:: spacing
- 220:: bracket
- 221:: upper side section of a bracket
- 222:: outer surface of the bracket
- 223:: lower side section of the bracket
- 231, 232:: bolt
- 233, 234:: bolt hole
- 240:: arm section
- 241, 242:: arm
- 260:: tandem footrest section
- 280:: flange
- 281:: fitting hole
- 282:: step
- 283:: bush
- 300:: body frame
- 320:: other bracket
- 400:: exterior cover
- 401:: upper side section of an exterior cover
- 402:: outer surface of the exterior cover
- 403:: lower side section of the exterior cover
- 420:: end surface
- 421:: cutout
- 440:: projection
- 441:: tip
- 442:: portion fitted to the fitting hole

## Claims

1. A footrest (200) for a straddle-type vehicle (100), the footrest (200) comprising:
a bracket (220) adapted to be attached to a body frame (300) of a vehicle (100), the bracket (220) including a flange (280) adapted to extend to an inner side of an exterior cover (400) adapted to be disposed adjacent to the bracket (220), wherein the flange (280) comprises a support section (210) adapted to support the exterior cover (400) and a fitting hole (281) adapted to receive a projection (440) formed on an inner surface of the exterior cover (400); and
further comprising a step (282) extending from an outer surface of the bracket (220), the flange (280) adapted to extend from the inner side of the outer surface of the bracket (222) to the inner side of the exterior cover (400) through a cutout (421) formed on an end surface (420) of the exterior cover (400) arranged to be adjacent to the bracket, such that the end surface (420) faces the step (282) of the bracket; and **characterized in that**:
the fitting hole (281) is formed as an elongated slot such that the exterior cover (400) and the bracket (220) are relatively positionable in a direction lying in the plane of the flange (280) and orthogonal to the direction of the exterior cover adjoining the bracket (220).

2. The footrest (200) according to Claim 1, wherein the support section (210) of the flange (280) is adapted to support the inner side of the exterior cover (400).

3. The footrest (200) according to Claim 1 or Claim 2, further comprising a bush (283) mounted within the fitting hole (281) formed in the flange (280) of the footrest (200), wherein the bush (283) is adapted to elastically receive the projection (440) formed on the exterior cover (400).

4. The footrest (200) according to Claim 3, wherein the fitting hole (281) is adapted to receive the projection (440) of the exterior cover (400) so that when the projection passes through the fitting hole (281) a tip (441) of the projection (440) passing through the fitting hole is thicker than a portion thereof fitted to the fitting hole (281).

5. The footrest (200) according to any preceding Claim, wherein the flange (280) of the footrest (200) is adapted to extend to the inner side of the exterior cover (400) so as to be orthogonal to the projection (440).

6. The footrest (200) according to any preceding Claim, wherein an outline of the bracket (220) of the footrest (200) is arranged to continue an outline of the exterior cover (400).

7. The footrest (200) according to any preceding claim, wherein said footrest (200) is a tandem footrest.

8. A straddle-type vehicle (100) comprising a footrest (200) according to any preceding Claim.

9. The straddle-type vehicle (100) according to Claim 8, wherein the straddle type vehicle (100) comprises the exterior cover (400).

10. An exterior cover assembly for a straddle-type vehicle (100), said cover assembly comprising:
an exterior cover (400) having a projection (440) formed on an inner surface of the exterior cover (400); and
a footrest (200) according to claim 1.

11. The assembly as defined by claim 10, wherein a tip (441) of the projection (440) adapted to pass through the fitting hole (281) is thicker than a portion (442) thereof fitted to the fitting hole (281).

12. The assembly of claim 10 or 11, wherein the exterior cover (400) comprises a resin molding formed by a split die, and the projection (440) is configured to project in an extracting direction of the die of the exterior cover (400).

## Patentansprüche

1. Fußraste (200) für ein Reitsitz-Fahrzeug (100), wobei die Fußraste (200) Folgendes umfasst:
eine Stütze (220), die dafür eingerichtet ist, an einem Aufbaurahmen (300) eines Fahrzeugs (100) befestigt zu werden, wobei die Stütze (220) einen Flansch (280) einschließt, der dafür eingerichtet ist, sich bis zu einer Innenseite einer äußeren Abdeckung (400) zu erstrecken, die dafür eingerichtet ist, angrenzend an die Stütze (220) angebracht zu werden, wobei der Flansch (280) eine Stützsektion (210), die dafür eingerichtet ist, die äußere Abdeckung (400) zu stützen, und ein Passloch (281), das dafür eingerichtet ist, einen Vorsprung (440) aufzunehmen, der an einer Innenfläche der äußeren Abdeckung (400) geformt ist, umfasst, und
die ferner eine Stufe (282) umfasst, die sich von einer Außenfläche der Stütze (220) aus erstreckt, wobei der Flansch (280) dafür eingerichtet ist, sich von der Innenseite der Außenfläche (222) der Stütze bis zu der Innenseite der äußeren Abdeckung (400) durch einen Ausschnitt (421) zu erstrecken, der an einer Stirnfläche (420) der äußeren Abdeckung (400) geformt ist, dafür angeordnet, der Stütze benachbart zu sein derart, dass die Stirnfläche (420) der Stufe (282) der Stütze gegenüberliegt, und **dadurch gekennzeichnet, dass**:
das Passloch (281) als ein länglicher Schlitz geformt ist derart, dass die äußere Abdeckung (400) und die Stütze (220) im Verhältnis positionierbar sind in einer Richtung, die in der Ebene des Flansches (280) und senkrecht zu der Richtung der äußeren Abdeckung, die sich an die Stütze (220) anschließt, liegt.

2. Fußraste (200) nach Anspruch 1, wobei die Stützsektion (210) des Flansches (280) dafür eingerichtet ist, die Innenseite der äußeren Abdeckung (400) zu stützen.

3. Fußraste (200) nach Anspruch 1 oder Anspruch 2, die ferner eine Buchse (283) umfasst, die innerhalb des in dem Flansch (280) der Fußraste (200) geformten Passlochs (281) angebracht ist, wobei die Buchse (283) dafür eingerichtet ist, elastisch den an der äußeren Abdeckung (400) geformten Vorsprung (440) aufzunehmen.

4. Fußraste (200) nach Anspruch 3, wobei das Passloch (281) dafür eingerichtet ist, den Vorsprung (440) der äußeren Abdeckung (400) so aufzunehmen, dass, wenn der Vorsprung durch das Passloch (281) hindurchgeht, eine Spitze (441) des Vorsprungs (440), die durch das Passloch hindurchgeht, dicker ist als ein Abschnitt desselben, der an das Passloch (281) angepasst ist.

5. Fußraste (200) nach einem der vorhergehenden Ansprüche, wobei der Flansch (280) der Fußraste (200) dafür eingerichtet ist, sich so bis zu der Innenseite der äußeren Abdeckung (400) zu erstrecken, dass er senkrecht zu dem Vorsprung (440) ist.

6. Fußraste (200) nach einem der vorhergehenden Ansprüche, wobei ein Umriss der Stütze (220) der Fußraste (200) dafür angeordnet ist, einen Umriss der äußeren Abdeckung (400) fortzusetzen.

7. Fußraste (200) nach einem der vorhergehenden Ansprüche, wobei die Fußraste (200) eine Tandem-Fußraste ist.

8. Reitsitz-Fahrzeug (100), das eine Fußraste (200) nach einem der vorhergehenden Ansprüche umfasst.

9. Reitsitz-Fahrzeug (100) nach Anspruch 8, wobei das Reitsitz-Fahrzeug (100) die äußere Abdeckung (400) umfasst.

10. Äußere Abdeckungsbaugruppe für ein Reitsitz-Fahrzeug (100), wobei die Abdeckungsbaugruppe Folgendes umfasst:
eine äußere Abdeckung (400), die einen Vorsprung (440) hat, der an einer Innenfläche der äußeren Abdeckung (400) geformt ist, und
eine Fußraste (200) nach Anspruch 1.

11. Baugruppe nach Anspruch 10, wobei eine Spitze (441) des Vorsprungs (440), die dafür eingerichtet ist, durch das Passloch (281) hindurchzugehen, dicker ist als ein Abschnitt (442) desselben, der an das Passloch (281) angepasst ist.

12. Baugruppe nach Anspruch 10 oder 11, wobei die äußere Abdeckung (400) ein Harzformstück umfasst, das durch eine geteilte Matrize geformt ist, und der Vorsprung (440) dafür konfiguriert ist, in einer Auszugsrichtung der äußeren Abdeckung (400) aus der Form vorzuspringen.

## Revendications

1. Repose-pied (200) pour un véhicule de type monté à califourchon (100), le repose-pied (200) comprenant:
un support (220) adapté pour être fixé sur une ossature de carrosserie (300) d'un véhicule (100), le support (220) incluant une bride (280) adaptée pour s'étendre sur un côté intérieur d'un capot extérieur (400) adapté pour être disposé de manière adjacente au support (220), dans lequel la bride (280) comprend une section de support (210) adaptée pour supporter le capot extérieur (400) et un trou de montage (281) adapté pour recevoir une saillie (440) formée sur une surface intérieure du capot extérieur (400); et
comprenant, en outre, un gradin (282) s'étendant à partir d'une surface extérieure du support (220), la bride (280) adaptée pour s'étendre du côté intérieur de la surface extérieure du support (222) vers le côté intérieur du capot extérieur (400) à travers une découpure (421) formée sur une surface d'extrémité (420) du capot extérieur (400) adaptée pour être adjacente au support, de manière à ce que la surface d'extrémité (420) soit en face du gradin (282) du support ; et **caractérisé par le fait que**:
le trou de montage (281) est formé en tant que fente allongée de sorte que le capot extérieur (400) et le support (220) peuvent être positionnés l'un par rapport à l'autre dans une direction située dans le plan de la bride (280) et perpendiculairement à la direction dans laquelle le capot extérieur est contigu au support (220).

2. Repose-pied (200) selon la revendication 1, dans lequel la section de support (210) de la bride (280) est adaptée pour supporter le côté intérieur du capot extérieur (400).

3. Repose-pied (200) selon la revendication 1 ou la revendication 2, comprenant, en outre, une douille (283) montée dans le trou de montage (281) formé dans la bride (280) du repose-pied (200), dans lequel la douille (283) est adaptée pour recevoir élastiquement la saillie (440) formée sur le capot extérieur (400).

4. Repose-pied (200) selon la revendication 3, dans lequel le trou de montage (281) est adapté pour recevoir la saillie (440) du capot extérieur (400) de manière à ce que, lorsque la saillie passe à travers le tour de montage (281), une extrémité (441) de la saillie (440) passant à travers le trou de montage soit plus épaisse qu'une partie de la saillie montée sur le trou de montage (281).

5. Repose-pied (200) selon l'une quelconque des revendications précédentes, dans lequel la bride (280) du repose-pied (200) est adaptée pour s'étendre sur le côté intérieur du capot extérieur (400) de manière à être perpendiculaire à la saillie (440).

6. Repose-pied (200) selon l'une quelconque des revendications précédentes, dans lequel un contour du support (220) du repose-pied (200) est adapté pour former la continuité d'un contour du capot extérieur (400).

7. Repose-pied (200) selon l'une quelconque des revendications précédentes, dans lequel ledit repose-pied (200) est un repose-pied tandem.

8. Véhicule de type monté à califourchon (100) comprenant un repose-pied (200) selon l'une quelconque des revendications précédentes.

9. Véhicule de type monté à califourchon (100) selon la revendication 8, dans lequel le véhicule de type monté à califourchon (100) comprend le capot extérieur (400).

10. Ensemble de capot extérieur pour un véhicule de type monté à califourchon (100), ledit ensemble de capot comprenant:
un capot extérieur (400) pourvu d'une saillie (440) formée sur une surface intérieure du capot extérieur (400); et
un repose-pied (200) selon la revendication 1.

11. Ensemble selon la revendication 10, dans lequel une extrémité (441) de la saillie (440) adaptée pour passer à travers le trou de montage (281) est plus épaisse qu'une partie (442) de la saillie montée sur le trou de montage (281).

12. Ensemble selon la revendication 10 ou 11, dans lequel le capot extérieur (400) comprend un moulage en résine formé au moyen d'une matrice segmentée et la saillie (440) est configurée pour faire saillie dans une direction d'extraction de la matrice du capot extérieur (400).
